# FASCICULE DE BREVET EUROPEEN

(11) **EP 3 969 759 B1**
(45) Date de publication et mention de la délivrance du brevet: **13.12.2023**
(21) Numéro de dépôt: 20716833.7
(22) Date de dépôt: 10.04.2020
(51) Int. Cl.: F04D 19/02, F01D 25/26, F04D 29/52

(54) **CARTER DE COMPRESSEUR POUR TURBOMACHINE**
VERDICHTERGEHÄUSE FÜR EINE TURBOMASCHINE
COMPRESSOR HOUSING FOR A TURBINE ENGINE

(30) Priorité: 16.05.2019 BE 201905325
(43) Date de publication de la demande: 23.03.2022
(73) Titulaire: Safran Aero Boosters SA, 4041 Herstal (BE)
(72) Inventeur: VYVEY, Morgan, 4041 Herstal (BE)
(74) Mandataire: Lecomte & Partners
(86) Numéro de dépôt international: PCT/EP2020/060336
(87) Numéro de publication internationale: WO 2020/229069

(56) Documents cités:
- FR-A1- 2 979 386
- FR-A5- 2 147 609
- US-A- 3 169 749
- US-A- 4 502 809
- US-A1- 2016 024 970

## Description

L'invention concerne la conception d'une turbomachine, notamment un turboréacteur d'avion ou un turbopropulseur d'aéronef. L'invention a en particulier trait au carter d'un compresseur.

### Technique antérieure

Dans une turbomachine axiale, et en particulier dans son ou ses compresseur(s), le flux d'air est comprimé par une alternance d'aubes rotoriques et d'aubes statoriques. Les aubes statoriques s'étendent radialement vers l'intérieur depuis une virole externe qui délimite la veine de passage du flux d'air. Le document EP 1 426 559 A1 décrit un exemple d'architecture de compresseur d'une telle turbomachine axiale. La virole qui maintient les aubes statoriques dispose de brides en amont et aval afin de la fixer au carter de soufflante en amont et au carter inter-compresseur en aval. La virole est donc d'une part un vecteur transmettant les efforts axiaux et le couple entre les différents carters auxquels elle est fixée et d'autre part celle-ci supporte les efforts subis par les aubes statoriques à l'intérieur du compresseur. Ces deux sources d'efforts génèrent des zones de concentration de contraintes en particulier au niveau de l'ancrage des aubes dans la virole. La réponse usuelle pour assurer la tenue mécanique dans ces zones de contraintes est de prévoir des surépaisseurs ou des pièces de renfort et donc du poids supplémentaire.

Le document FR 2147609 A5 représente un autre exemple de l'art antérieur de la présente invention.

### Résumé de l'invention

### Problème technique

L'invention a pour objectif de pallier les inconvénients exposés ci-dessus et en particulier de proposer un compresseur et une turbomachine plus léger/légère sans compromission de leur tenue mécanique.

### Solution technique

L'invention a pour objet un carter de compresseur pour turbomachine et notamment pour turboréacteur d'aéronef, le carter étant remarquable en ce qu'il comprend : une enveloppe comprenant une surface radialement interne ; une virole amont ; et une virole aval, chacune virole supportant au moins une rangée d'aubes statoriques s'étendant radialement vers l'intérieur depuis la virole respective, chacune des viroles disposant d'une surface interne respective apte à délimiter un flux d'air, et chacune des viroles disposant d'une surface externe respective en regard de la surface interne de l'enveloppe, les viroles étant fixées à l'enveloppe en porte-à-faux et étant agencées axialement de telle sorte à présenter un jeu axial entre elles, les viroles comprenant chacune une extrémité axiale distale respective, celles-ci définissant entre elles ledit jeu axial, et les viroles étant fixées à l'enveloppe uniquement à leur extrémité proximale respective axialement opposée à leur extrémité distale.

En d'autres termes, la solution technique vise à dissocier les efforts externes que doit transmettre le carter de par sa position intermédiaire dans la turbomachine, des efforts induits par les aubes à l'intérieur du carter.

Par « en regard », on entend une proximité radiale entre la surface externe des viroles et la surface interne de l'enveloppe. La surface externe des viroles peut venir en contact de l'enveloppe au droit des fixations entre les viroles et l'enveloppe et peut être à distance, avec un léger jeu de montage. Ce porte-à-faux permet d'éviter un frottement entre la surface externe des viroles et la surface interne de l'enveloppe et ainsi éviter la transmission des efforts des viroles à l'enveloppe. Comme décrit plus bas, le porte-à-faux peut être d'environ 20% de la longueur axiale des viroles.

Le jeu axial entre les viroles n'est pas un simple jeu permettant le montage des aubes l'une à proximité de l'autre pour absorber une certaine tolérance de fabrication. Il s'agit bien d'un jeu intentionnel qui a pour but d'empêcher tout contact axial entre les deux viroles pour éviter tout transfert d'effort de l'une vers l'autre. Dit autrement, chaque virole n'est qu'au contact de l'enveloppe et de ses aubes et son bilan des efforts se résume donc à l'effort induit par le flux d'air sur elle-même ou sur les aubes statoriques qu'elle supporte, la réaction de sa fixation à l'enveloppe et la gravité.

Selon des modes avantageux de l'invention, le carter peut comprendre une ou plusieurs des caractéristiques suivantes, prises isolément ou selon toutes les combinaisons techniquement possibles :
- le jeu axial entre les viroles est d'une dimension telle que lorsque l'enveloppe est comprimée sous l'action de conditions thermomécaniques maximales admissibles pour le compresseur, les viroles restent axialement à distance l'une de l'autre. Le jeu axial étant souhaité même lors du fonctionnement de la turbomachine, il convient qu'il soit dimensionné de sorte à exister même dans les conditions limites de fonctionnement. Ainsi, le jeu est conçu en conséquence des déformations limites de l'enveloppe, calculées pour des conditions thermomécaniques maximales admissibles par le compresseur. Ces conditions limites sont connues de l'homme du métier ;
- les viroles sont fixées, chacune indépendamment de l'autre, à l'enveloppe. Ainsi, les viroles sont fixées à l'enveloppe dans des zones différentes de l'enveloppe ;
- la virole amont et l'enveloppe comprennent des brides radiales amont respectives, la virole amont étant fixée à l'enveloppe au moyen d'éléments de visserie, préférentiellement axiaux, solidarisant la bride radiale amont de la virole amont à la bride radiale amont de l'enveloppe. Les éléments de visserie peuvent être des vis angulairement réparties autour de l'axe de symétrie du carter ;
- l'enveloppe comprend une bride radiale aval munie d'orifices de fixation et la virole aval est fixée à l'enveloppe au moyen d'éléments de fixation, préférentiellement radiaux, qui pénètrent dans les orifices de fixation de la bride radiale aval de l'enveloppe. Les éléments de fixation peuvent être par exemple des vis dont les têtes sont noyées dans la virole, afin de ne pas altérer la continuité de la surface de guidage du flux d'air assurée par la surface interne de la virole ;
- le jeu axial entre les viroles est comblé par un joint notamment en silicone. Celui-ci est suffisamment flexible pour ne pas transmettre d'effort entre les deux viroles et pour assurer la continuité de la surface de guidage de l'air quelque soit l'état de dilatation ou compression de l'enveloppe ;
- l'enveloppe chevauche axialement chaque virole d'une longueur respective de chevauchement et la surface externe respective des viroles coïncide avec la surface interne de l'enveloppe sur au plus 20% de la longueur de chevauchement respective. Ainsi, les viroles peuvent éventuellement se distancier radialement de la surface de l'enveloppe, si la conception le nécessite en termes d'une part de guidage de l'air et d'autre part de l'environnement de l'enveloppe, sachant que l'enveloppe et les viroles sont préférentiellement d'épaisseur constante ;
- le carter comprend une virole additionnelle intercalée entre les viroles amont et aval, et un jeu axial sépare les viroles deux à deux ;
- chaque virole supporte au moins une, préférentiellement exactement une, rangée d'aubes statoriques s'étendant radialement vers l'intérieur depuis la virole respective ;
- chaque virole reçoit une couche de matériau abradable disposée en amont d'une ou de chaque rangée d'aubes statoriques et agencée sur la surface interne de la virole. Le matériau abradable est apte à coopérer avec les extrémités radiales externes d'une roue mobile d'un rotor ;
- l'enveloppe comprend une surface externe présentant des renforts sous la forme de surépaisseurs définissant une surface cylindrique ou conique. Ces renforts permettent de rigidifier l'enveloppe. Il peut être intéressant pour des raisons d'homogénéité thermique et/ou pour des raisons de vibratoire, de prévoir ces renforts axialement à distance des aubes statoriques et/ou axialement à distance de la ou des couches de matériau abradable.

L'invention a également pour objet une turbomachine comprenant un compresseur basse-pression, un compresseur haute-pression et un carter intermédiaire, disposé entre le compresseur basse-pression et le compresseur haute-pression, la turbomachine étant remarquable en ce que le compresseur basse-pression dispose d'un carter selon l'un des modes de réalisation exposés ci-dessus et d'un étage d'aubes à calage variable en amont du carter, l'enveloppe du carter s'étendant axialement depuis l'étage d'aubes à calage variable jusqu'au carter intermédiaire.

Selon un mode de réalisation avantageux, l'étage d'aubes à calage variable comprend une bride de section sensiblement en T avec une branche radiale et une branche axiale, la branche radiale étant au contact de la bride radiale de la virole amont et la branche axiale chevauchant axialement la bride radiale de la virole amont et la bride radiale amont de l'enveloppe.

Selon un mode de réalisation avantageux, l'étage d'aubes à calage variable comprend une surface de centrage de la virole amont ; et/ou la branche axiale comprend une surface de centrage de la bride radiale amont de la virole amont et/ou de l'enveloppe.

Selon un mode de réalisation avantageux, la branche axiale comprend une surface cylindrique qui supporte un mécanisme d'actionnement des aubes à calage variable, la surface cylindrique chevauchant axialement la bride radiale amont de la virole et la bride radiale amont de l'enveloppe. Le mécanisme peut être fait d'une bague de synchronisation supportée par des patins, la bague synchronisant le pivotement de bielles solidaires des aubes à calage variable. Cette conception permet de supporter les efforts du mécanisme d'actionnement avec plusieurs pièces qui par conséquent peuvent, à cet endroit, être d'épaisseur moindre.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles, à moins que le contraire ne soit explicitement mentionné.

### Avantages apportés

Dans un turboréacteur connu, la même virole concentre d'une part les efforts axiaux et le couple entre les différents carters auxquels elle est fixée, c'est-à-dire une partie de la poussée provenant de la soufflante, via le train épicycloïdal par exemple et d'autre part les efforts « internes » causés par le flux aérodynamique et remontant via les aubes statoriques à l'intérieur de la virole. Il y a donc des zones de la virole qui concentrent des contraintes liées à ces deux sources d'effort au niveau des têtes des aubes.

Ces deux sources d'efforts sont dissociées dans l'invention par l'utilisation de l'enveloppe et des viroles. Les efforts subis par les aubes ne sont pas directement transmis à l'enveloppe mais sont déplacés aux extrémités de fixation des viroles à l'enveloppe.

Parmi les avantages associés à cette construction, le carter peut être conçu avec des pièces de plus petites épaisseurs et donc moins lourdes car il subit moins de contraintes mécaniques locales.

Un autre avantage en prévoyant différentes pièces (viroles et enveloppe) est qu'il est possible de ne remplacer qu'une des pièces en jeu en cas de défaillance à la fabrication ou à l'usage plutôt que de mettre au rebut l'intégralité du carter.

### Brève description des dessins

La figure 1 représente une turbomachine selon l'invention ;
La figure 2 représente une vue en coupe schématique d'une partie d'un compresseur de l'état de l'art ;
Les figures 3 à 6 illustrent respectivement un premier, un deuxième, un troisième et un quatrième mode de réalisation du carter selon l'invention.

### Description des modes de réalisation

Dans la description qui va suivre, les termes « interne » (ou « intérieur ») et « externe » (ou « extérieur ») renvoient à un positionnement par rapport à l'axe de rotation d'une turbomachine. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine. Le terme « solidaire » est compris comme solidaire en rotation, et notamment rigidement lié. Le terme « monobloc » est équivalent à « venu de matière » et désigne différents éléments réalisés dans un même bloc de matière, par opposition à « rapporté » qui signifie qu'un élément est rattaché, après sa fabrication, à un autre élément. Les figures représentent les éléments de manière schématique, notamment sans l'intégralité des éléments d'assemblage ou d'étanchéité. Les dimensions et notamment l'épaisseur radiale, sont exagérées afin de faciliter la compréhension des figures.

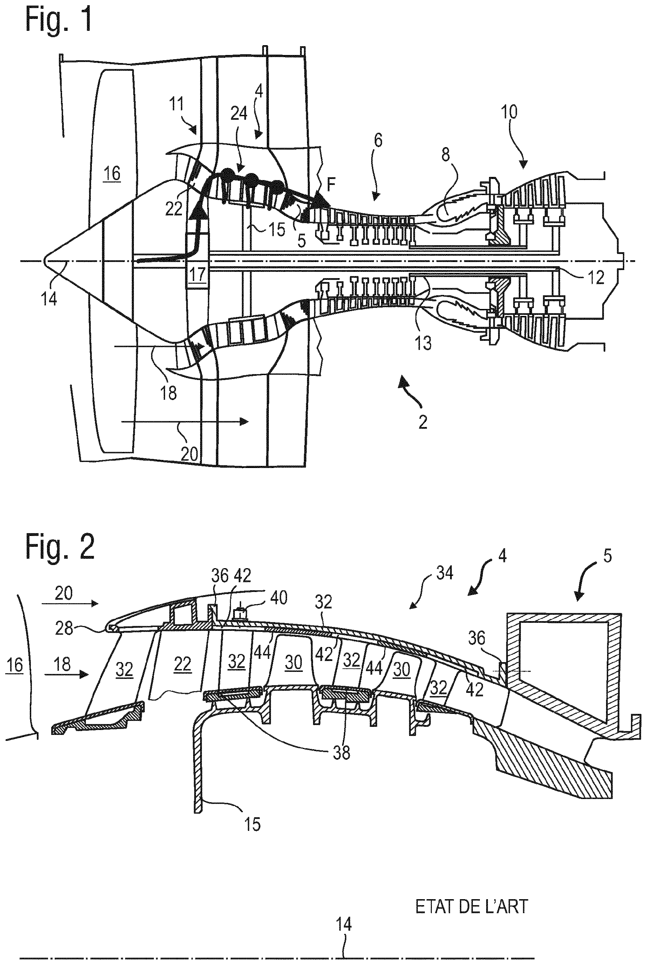

La figure 1 représente de manière simplifiée une turbomachine 2. Le turboréacteur 2 comprend un premier compresseur, basse-pression 4 et un deuxième compresseur, haute-pression 6, une chambre de combustion 8 et deux turbines 10. En fonctionnement, la puissance mécanique des turbines 10 met en mouvement les deux compresseurs 4 et 6 au moyen d'arbres respectifs 12, 13. Les compresseurs 4, 6 comportent plusieurs rangées d'aubes de rotor (ou rotoriques) associées à des rangées d'aubes de stator (ou statoriques). La rotation du rotor 15 autour de son axe de rotation 14 permet ainsi de générer un débit d'air et de comprimer progressivement ce dernier jusqu'à l'entrée de la chambre de combustion 8.

Une soufflante 16 est couplée à l'arbre 12 et génère un flux d'air qui se divise en un flux primaire 18 et en un flux secondaire 20 traversant un conduit annulaire (partiellement représenté) le long de la machine pour ensuite rejoindre le flux primaire en sortie de turbine.

Des moyens de démultiplication, tel un réducteur épicycloïdal 17, peuvent réduire la vitesse de rotation de la soufflante 16 par rapport à la turbine associée.

Un carter amont 22 muni de bras de support (ou « struts ») maintient le réducteur épicycloïdal 17 et soutient la partie amont de la turbomachine. Un carter de compresseur 24 supporte le compresseur 4. Un carter inter-compresseur 5 comprenant des bras de support est disposé entre le compresseur basse-pression 4 et le compresseur haute-pression 6.

En fonctionnement, les différents carters sont amenés à supporter des charges importantes. La soufflante tend à tirer l'ensemble de l'avion vers l'avant. Les carter sont des pièces mécaniques qui doivent donc supporter chacun au moins une partie de la poussée générée par la soufflante. Aussi, les carters doivent encaisser les efforts transmis par les aubes et en particulier les aubes statoriques qui redressent le flux d'air dans le compresseur. Ces efforts sont matérialisés schématiquement par la flèche notée F sur la figure 1 et on observe les points de concentration des contraintes où se rejoignent les chemins des efforts.

La figure 2 est une vue en coupe du compresseur 4 dans une turbomachine connue. On peut y observer une partie de la soufflante 16 ainsi que le bec de séparation 28 des flux primaire 18 et secondaire 20. Le rotor 15 peut comprendre plusieurs rangées d'aubes rotoriques 30.

Le compresseur basse-pression 4 comprend au moins un redresseur qui contient une rangée annulaire d'aubes statoriques 32 ayant pour but de redresser le flux d'air dévié par les aubes tournantes.

Le compresseur basse-pression 4 comprend un carter 34. Le carter 34 présente une forme généralement axisymétrique pouvant intégrer des renforts, des cannelures ou des nervures de rigidification. Le carter 34 comprend des brides de fixation 36, par exemple des brides annulaires de fixation 36 pour la fixation du bec de séparation 28 et/ou pour se fixer à un carter intermédiaire 5 de la turbomachine.

Les aubes statoriques 32 s'étendent essentiellement radialement depuis le carter 34 jusqu'à des viroles internes 38. Une des rangées d'aubes statoriques 32 peut être à orientation variable autour de son axe 40. Les aubes statoriques 32 sont fixées au carter 34 au moyen de plateformes 42. Une couche de matériau abradable 44 est généralement prévue en regard des aubes rotoriques 30. Dans une telle configuration, les zones d'ancrages des aubes statoriques (autour des plateformes 42) sont des zones de concentrations de contraintes car elles concentrent à la fois les efforts encaissés par les aubes statoriques induits par le redressement du flux d'air 18 et les efforts transmis depuis la soufflante 16 ou le réducteur 17.

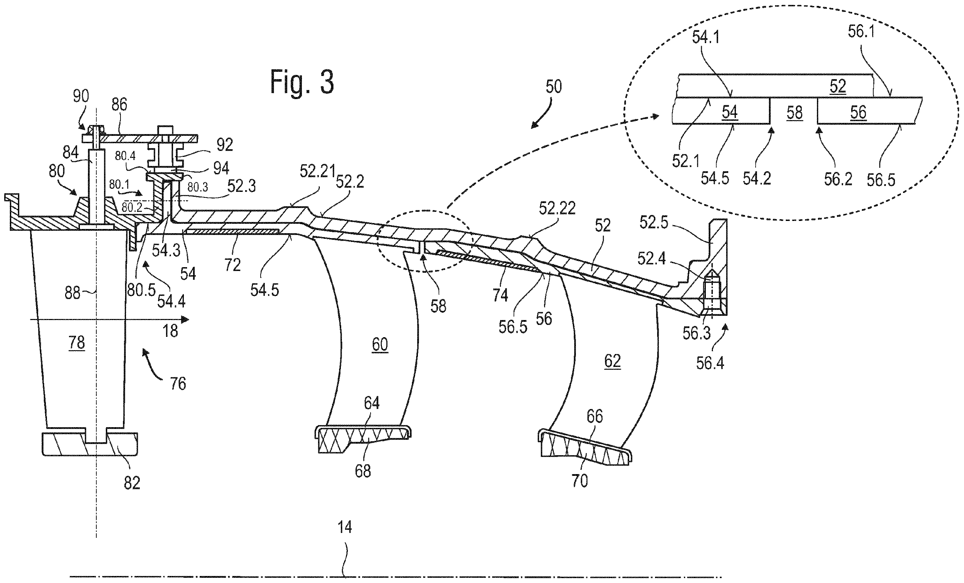

La figure 3 représente un premier mode de réalisation d'un carter 50 selon l'invention. Le carter 50 comprend une enveloppe 52 de forme sensiblement axisymétrique autour de l'axe 14 du compresseur. L'enveloppe 52 définit une cavité interne qui accueille une virole amont 54 et une virole aval 56. L'enveloppe 52 et les viroles 54, 56 peuvent s'étendre sur 360° autour de l'axe 14 ou être formées de plusieurs secteurs angulaires qui ensemble forment 360°.

L'enveloppe 52 comprend une surface radialement interne 52.1 et les viroles 54, 56 comprennent des surfaces radialement externes 54.1, 56.1 en regard de la surface interne 52.1 de l'enveloppe 52. Les surfaces externes 54.1, 56.1 peuvent avoir un profil voisin de celui de la surface interne 52.1. Ainsi, les viroles 54, 56 sont agencées avec un léger jeu radial à l'intérieur de l'enveloppe 52 permettant leur assemblage et évitant la transmission d'effort entre les surfaces externes des viroles et la surface interne de l'enveloppe.

Comme illustré sur une portion agrandie de la figure 3, un jeu axial 58 est prévu entre les viroles 54, 56. Ce jeu 58 peut éventuellement être comblé par un matériau élastique qui assure la continuité de la surface de guidage de l'air tel un joint en silicone (non représenté).

Le jeu axial 58 est mesuré entre l'extrémité distale 54.2 de la virole amont 54 et l'extrémité distale 56.2 de la virole aval 56.

La virole amont 54 supporte une rangée annulaire d'aubes statoriques 60. La virole aval 56 supporte une rangée annulaire d'aubes statoriques 62. Les aubes statoriques 60, 62 s'étendent radialement depuis leur virole respective 54, 56 vers l'axe 14. À leur extrémité intérieure, ces aubes sont solidarisées par une virole interne 64, 66, dont la surface intérieure est revêtue d'un matériau abradable 68, 70 destiné à venir au contact du rotor (non représenté).

Les aubes 60, 62 peuvent être fixées à leur virole respective 54, 56 au moyen de plateformes (similaires au numéro 42 de la figure 2).

La virole amont 54 comprend une bride radiale amont 54.3. Celle-ci se situe au voisinage de son extrémité proximale 54.4, c'est-à-dire l'extrémité axialement opposée à celle qui définit le jeu 58. La bride radiale amont 54.3 peut se situer dans le premier cinquième de la longueur axiale de la virole amont 54.

La virole amont 54 est fixée, via sa bride radiale amont 54.3 à une bride radiale amont 52.3 de l'enveloppe. Une pluralité d'éléments de visserie (non représentés) distribués angulairement autour de l'axe 14 et orientés principalement axialement, viennent solidariser les deux brides 52.3, 54.3 ensemble. C'est l'unique endroit où la virole 54 est fixée à l'enveloppe 52.

La virole aval 56 comprend des orifices radiaux 56.3 aménagés au voisinage de son extrémité proximale 56.4, c'est-à-dire l'extrémité axialement opposée à celle qui définit le jeu 58. Ces orifices 56.3 sont alignés axialement et circonférentiellement avec des orifices taraudés 52.4 aménagés dans une bride radiale aval 52.5 de l'enveloppe 52. Ainsi, des éléments vissés (non représentés) peuvent venir solidariser la bride aval 56 à l'enveloppe. Ces éléments sont préférablement des vis dont la tête est noyée dans la matière pour ne pas venir en sailli dans la veine d'air. Un amalgame de matériau - par exemple du type abradable - peut venir reboucher l'écart éventuel entre la tête et la surface interne 56.5 de la virole pour parfaire la continuité de la surface de guidage de l'air.

Ainsi, les viroles 54, 56 sont fixées à l'enveloppe 52 indépendamment l'une de l'autre, et le jeu 58 se mesure entre les deux extrémités 54.2, 56.2 en porte-à-faux. Il n'y a aucune transmission d'effort d'une virole 54 à l'autre 56.

Aussi, lorsque l'enveloppe 52 se déforme en fonctionnement (dilatation, compression, torsion, etc.), elle n'engendre pas de contraintes sur les viroles 54, 56.

Une couche de matériau abradable 72, 74 peut être rapportée sur la surface interne 54.5, 56.5 des viroles 54, 56. Cette couche 72, 74 est apte à interagir avec les extrémités radiales externes d'aubes rotoriques (notées 30 sur la figure 2).

L'enveloppe 52 peut accueillir des zones de renfort pour être rigidifiée en torsion et/ou en traction. Par exemple, des surépaisseurs matérialisées par les surfaces cylindriques ou coniques 52.21, 52.22.

Directement en amont du carter 50 se trouve un étage 76 d'aubes à calage variable 78.

Les aubes 78 s'étendent essentiellement radialement depuis un anneau externe 80 vers un anneau interne 82. Les aubes 78 sont fixées à l'anneau externe 80 à l'aide d'axes ou tourillons 84. Les tourillons 84 sont entraînés en pivotement par une bielle 86 respective autour de son axe 88. La bielle 86 est solidaire du tourillon 84, fixée par exemple par un écrou 90.

Les bielles 86 de la rangée annulaire d'aubes 78 sont toutes reliées à une bague de synchronisation 92 au moyen de tiges. Ces tiges peuvent se terminer intérieurement par des patins 94. Le mécanisme peut être équivalent à celui décrit dans la demande de brevet BE2018/5429 du même Demandeur.

L'anneau 80 comprend une bride aval 80.1 de section en T, avec une branche radiale 80.2 au contact de la bride radiale amont 54.3 de la virole amont 54 et une branche axiale 80.3 qui surplombe les brides radiales amont 52.3, 54.3.

La branche axiale 80.3 dispose d'une surface externe cylindrique 80.4 sur laquelle repose la bague 92 ou des patins 94 qui y sont rapportés.

L'anneau 80 comprend une surface interne 80.5 de centrage de la surface externe 54.1 de la virole amont 54. Alternativement ou en complément, la branche axiale 80.3 peut avoir une surface interne de centrage des brides radiales amont 52.3, 54.3 et donc de centrage de l'enveloppe 52 et de la bride amont 54.

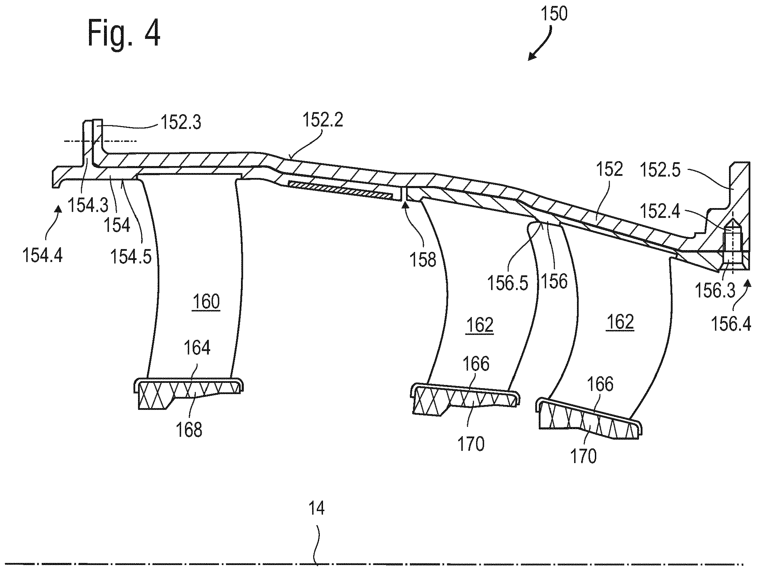

La figure 4 décrit un second mode de réalisation du carter 150 de l'invention. Les numéros de référence sont incrémentés de 100. Seuls les éléments distinctifs de ce mode de réalisation vont être décrits ici.

Dans cet exemple, la virole aval 156 supporte deux rangées d'aubes statoriques 162. Chacune de ces rangées redresse partiellement le flux d'air pour qu'en aval de la second rangée, le flux soit principalement axial.

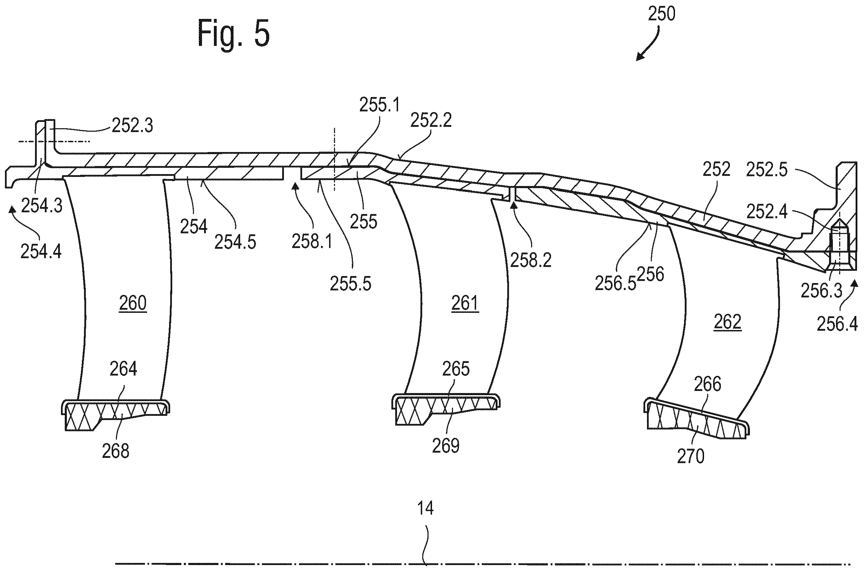

La figure 5 décrit un troisième mode de réalisation du carter 250 de l'invention. Les numéros de référence sont incrémentés de 100. Seuls les éléments distinctifs de ce mode de réalisation vont être décrits ici. Dans cet exemple, une virole additionnelle 255 est positionnée entre la virole amont 254 et la virole aval 256. Un jeu respectif, 258.1, 258.2 sépare les viroles 254, 255, 256 deux à deux. Les jeux 258.1, 258.2 peuvent être de longueurs axiales différentes.

La virole additionnelle 255 peut être vissée ou rivetée à l'enveloppe 252. Un axe en trait mixte matérialise cette liaison sur la figure 5. Cette virole 255 est préférentiellement composée de plusieurs secteurs angulaires.

La virole additionnelle 255 a les mêmes propriétés que les viroles amont et aval (254, 256), à savoir notamment qu'elle supporte une ou plusieurs aubes statoriques, et son profil externe coïncide avec celui de l'enveloppe.

Alternativement ou en complément, la virole additionnelle 255 peut comprendre des brides radiales (non représentées) pour sa fixation à l'enveloppe 252, les brides radiales pénétrant dans des gorges internes (non représentées) de l'enveloppe 252.

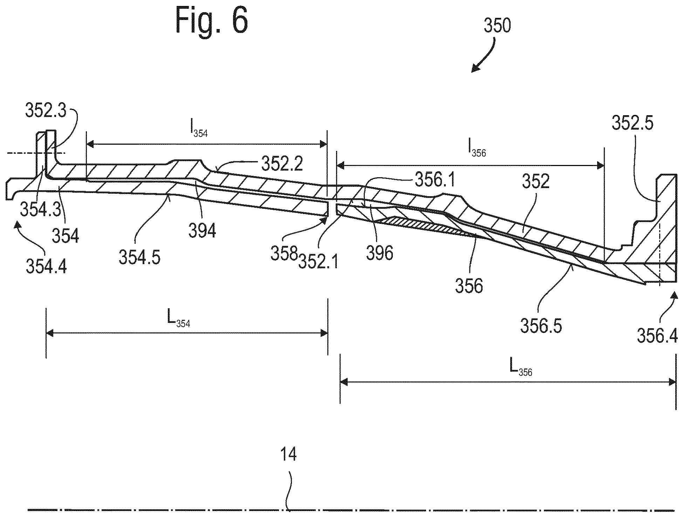

La figure 6 représente l'enveloppe 352 et les viroles 354, 356 dans un quatrième mode de réalisation. Cette figure met en évidence le jeu qui s'étend entre la surface externe 354.1, 356.1 des viroles 354, 356 et la surface interne 352.1 de l'enveloppe 352. Ce jeu peut être préférentiellement inférieur à 1 mm et s'étend sur une longueur axiale l₃₅₄ et l₃₅₆ qui représente au maximum 80% de la longueur du chevauchement entre les viroles 354, 356 et l'enveloppe 352, longueurs de chevauchement notées L₃₅₄ et L₃₅₆. Le jeu peut être variable et montrer des décrochements 394, 396 qui peuvent être utiles pour adapter au mieux la surface de guidage de l'air 354.5, 356.5 tout en répondant à des contraintes géométriques de l'enveloppe 352 et en conservant une épaisseur sensiblement constante pour les viroles 354, 356 et l'enveloppe 352.

L'invention a été décrite au moyen de quatre modes de réalisation mais n'y est pas limitée. Des éléments de chaque mode de réalisation sont combinables avec des éléments d'autres modes de réalisation. Par exemple, les couches de matériau abradable 72, 74 ou les surfaces d'appui 52.21, 52.22, sont intégrables aux modes de réalisation des figures 4 à 6. L'homme du métier comprend également du présent enseignement que le nombre d'aubes par virole peut être adapté à loisir.

## Revendications

1. Carter (50, 150, 250, 350) de compresseur axial pour turbomachine (2) et notamment pour turboréacteur d'aéronef, le carter (50, 150, 250, 350) comprenant:
- une enveloppe (52, 152, 252, 352) comprenant une surface radialement interne (52.1, 152.1, 252.1, 352.1) ;
- une virole amont (54, 154, 254, 354) ; et
- une virole aval (56, 156, 256, 356) ;
chaque virole (54, 56, 154, 156, 254, 256, 354, 356) supportant au moins une rangée d'aubes statoriques (60, 62, 160, 162, 260, 261, 262) s'étendant radialement vers l'intérieur depuis la virole respective (54, 56, 154, 156, 254, 256, 354, 356),
chacune des viroles (54, 56, 154, 156, 254, 256, 354, 356) disposant d'une surface interne (54.5, 56.5, 154.5, 156.5, 254.5, 256.5, 354.5, 356.5) respective apte à délimiter un flux d'air (18), et chacune des viroles (54, 56, 154, 156, 254, 256, 354, 356) disposant d'une surface externe (54.1, 56.1, 255.1, 356.1) respective en regard de la surface interne (52.1, 352.1) de l'enveloppe (52, 152, 252, 352), les viroles (54, 56, 154, 156, 254, 256, 354, 356) étant fixées à l'enveloppe en porte-à-faux et étant agencées axialement de telle sorte à présenter un jeu axial (58, 158, 358) entre elles, le carter étant **caractérisé en ce que** les viroles (54, 56, 154, 156, 254, 256, 354, 356) comprennent chacune une extrémité distale respective (54.2, 56.2), celles-ci définissant entre elles ledit jeu axial (58, 158, 358), et **en ce que** les viroles (54, 56, 154, 156, 254, 256, 354, 356) sont fixées à l'enveloppe (52, 152, 252, 352) uniquement à leur extrémité proximale respective (54.4, 56.4, 154.4, 156.4, 254.4, 256.4, 354.4, 356.4) axialement opposée à leur extrémité distale (54.2, 56.2).

2. Carter (50, 150, 250, 350) selon la revendication 1, **caractérisé en ce que** le jeu axial (58, 158, 358) entre les viroles (54, 56, 154, 156, 254 256, 354, 356) est d'une dimension telle que lorsque l'enveloppe (52, 152, 252, 352) est comprimée sous l'action de conditions thermomécaniques maximales admissibles pour le compresseur (4), les viroles (54, 56, 154, 156, 254, 256, 354, 356) restent axialement à distance l'une de l'autre.

3. Carter (50, 150, 250, 350) selon l'une des revendications 1 ou 2, **caractérisé en ce que** la virole amont (54, 154, 254, 354) et l'enveloppe (52, 152, 252, 352) comprennent des brides radiales amont respectives (52.3, 54.3, 152.3, 154.3, 252.3, 254.3, 352.3, 354.3), la virole amont (54, 154, 254, 354) étant fixée à l'enveloppe (52, 152, 252, 352) au moyen d'éléments de visserie, préférentiellement axiaux, solidarisant la bride radiale amont (54.3, 154.3, 254.3, 354.3) de la virole amont (54, 154, 254, 354) à la bride radiale amont (52.3, 152.3, 252.3, 352.3) de l'enveloppe (52, 152, 252, 352).

4. Carter (50, 150, 250, 350) selon l'une des revendications 1 à 3, **caractérisé en ce que** l'enveloppe (52, 152, 252, 352) comprend une bride radiale aval (52.5, 152.5, 252.5, 352.5) munie d'orifices de fixation, et **en ce que** la virole aval (56, 156, 256, 356) est fixée à l'enveloppe (52, 152, 252, 352) au moyen d'éléments de fixation, préférentiellement radiaux, qui pénètrent dans les orifices de fixation (52.4, 152.4, 252.4, 352.4) de la bride radiale aval (52.5, 152.5, 252.5, 352.5) de l'enveloppe (52, 152, 252, 352).

5. Carter (50, 150, 250, 350) selon l'une des revendications 1 à 4, **caractérisé en ce que** le jeu axial (58, 158, 358) entre les viroles (54, 56 154, 156, 254, 256, 354, 356) est comblé par un joint notamment en silicone.

6. Carter (50, 150, 250, 350) selon l'une des revendications 1 à 5, **caractérisé en ce que** l'enveloppe (52, 152, 252, 352) chevauche axialement chaque virole (54, 56, 154, 156, 254, 256, 354, 356) d'une longueur respective de chevauchement (L₃₅₄, L₃₅₆) et la surface externe (54.1, 56.1, 154.1, 156.1, 254.1, 256.1, 354.1, 356.1) respective des viroles (54, 56, 154, 156, 254, 256, 354, 356) coïncide avec la surface interne (52.1, 152.1, 252.1, 352.1) de l'enveloppe (52, 152, 252, 352) sur au plus 20% de la longueur de chevauchement respective (L₃₅₄, L₃₅₆).

7. Carter (250) selon l'une des revendications 1 à 6, **caractérisé en ce que** le carter (250) comprend une virole (255) additionnelle intercalée entre les viroles amont et aval (254, 256), et **en ce qu'**un jeu axial (258.1, 258.2) sépare les viroles (254, 255, 256) deux à deux.

8. Carter (50, 250, 350) selon l'une des revendications 1 à 7, **caractérisé en ce que** chaque virole (54, 56, 254, 256, 354, 356) supporte exactement une rangée d'aubes statoriques (60, 62, 260, 261 262) s'étendant radialement vers l'intérieur depuis la virole respective (54, 56, 254, 256, 354, 356).

9. Carter (50, 250, 350) selon la revendication 8, **caractérisé en ce que** chaque virole (54, 56, 254, 256, 354, 356) reçoit une couche de matériau abradable (72, 74) disposée en amont d'une ou de chaque rangée d'aubes statoriques (60, 62, 260, 261, 262) et agencée sur la surface interne de la virole (54, 56, 254, 256, 354, 356)

10. Carter (50, 250, 350) selon l'une des revendications 8 ou 9, **caractérisé en ce que** l'enveloppe (52, 252, 352) comprend une surface externe (52.2) présentant des renforts (52.21, 52.22) sous la forme de surépaisseurs définissant une surface cylindrique ou conique (52.21, 52.22).

11. Turbomachine (2) comprenant un compresseur axial basse-pression (4), un compresseur haute-pression (6) et un carter intermédiaire (5), disposé entre le compresseur basse-pression (4) et le compresseur haute-pression (6), la turbomachine comprenant le compresseur axial basse-pression (4) dispose d'un carter (50, 150, 250, 350) selon l'une des revendications 1 à 10 et d'un étage d'aubes à calage variable (76) en amont du carter (50, 150, 250, 350), l'enveloppe (52, 152, 252, 352) du carter (50, 150, 250, 350) s'étendant axialement depuis l'étage d'aubes à calage variable (76) jusqu'au carter intermédiaire (5).

12. Turbomachine (2) selon la revendication 11 comprenant un carter (50, 350) selon la revendication 3, **caractérisée en ce que** l'étage d'aubes à calage variable (76) comprend une bride (80.1) de section sensiblement en T avec une branche radiale (80.2) et une branche axiale (80.3), la branche radiale (80.2) étant au contact de la bride radiale amont (54.3, 354.3) de la virole amont (54, 354) et la branche axiale (80.3) chevauchant axialement la bride radiale amont (54.3, 354.3) de la virole amont (54, 354) et la bride radiale amont (52.3, 352.3) de l'enveloppe (52, 352).

13. Turbomachine (2) selon la revendication 12, **caractérisée en ce que** l'étage d'aubes à calage variable (76) comprend une surface de centrage (80.5) de la virole amont (54, 354) ; et/ou la branche axiale (80.3) comprend une surface de centrage de la bride radiale amont (52.3, 54.3, 352.3, 354.3) de la virole amont (54, 354) et/ou de l'enveloppe (52, 352).

14. Turbomachine (2) selon l'une des revendications 12 ou 13, **caractérisée en ce que** la branche axiale (80.3) comprend une surface cylindrique (80.4) qui supporte un mécanisme d'actionnement (86, 90, 92, 94) des aubes à calage variable (76), la surface cylindrique (80.4) chevauchant axialement la bride radiale amont (54.3, 354.3) de la virole amont (54, 354) et la bride radiale amont (52.3, 352.3) de l'enveloppe (52, 352).

## Patentansprüche

1. Schutzhülle (50, 150, 250, 350) für eine Turbomaschine (2), insbesondere für Flugzeug-Turbotriebwerke, wobei die Schutzhülle (50, 150, 250, 350) Folgendes umfasst:
- einen Mantel (52, 152, 252, 352) mit einer radial inneren Oberfläche (52.1, 152.1, 252.1, 352.1);
- eine stromaufwärts gelegene Hülse (54, 154, 254, 354); und
- eine stromabwärts gelegene Hülse (56, 156, 256, 356);
wobei jede Hülse (54, 56, 154, 156, 254, 256, 354, 356) mindestens eine Reihe von Statorschaufeln (60, 62, 160, 162, 260, 261, 262) aufweist, die sich von der entsprechenden Hülse (54, 56, 154, 156, 254, 256, 354, 356) radial nach innen erstrecken,
wobei jede der Hülsen (54, 56, 154, 156, 254, 256, 256, 354, 356) eine entsprechende Innenfläche (54.5, 56.5, 154.5, 156.5, 254.5, 256.5, 354.5, 356.5) aufweist, die geeignet ist, einen Luftstrom (18) zu begrenzen, und jede der Hülsen (54, 56, 154, 156, 254, 256, 354, 356) eine Außenfläche (54.1, 56.1, 255.1, 356. 1), die der Innenfläche (52.1, 352.1) des Mantels (52, 152, 252, 352) entspricht, wobei die Hülsen (54, 56, 154, 156, 254, 256, 354, 356) an der Schutzhülle verspannt und axial so angeordnet sind, dass sie ein axiales Spiel (58, 158, 358) dazwischen aufweisen, wobei die Schutzhülle **dadurch gekennzeichnet ist, dass**
die Hülsen (54, 56, 154, 156, 254, 256, 354, 356) jeweils ein distales Ende (54.2, 56.2) aufweisen, das das jeweilige axiale Spiel (58, 158, 358) zwischen ihnen definiert, und dass
die Hülsen (54, 56, 154, 156, 254, 256, 354, 356) nur an dem entsprechenden proximalen Ende (54.4, 56.4, 154.4, 156.4, 254.4, 256.4, 354.4, 356.4), das ihrem distalen Ende (54.2, 56.2) axial gegenüberliegt, am Mantel (52, 152, 252, 352) befestigt sind.

2. Schutzhülle (50, 150, 250, 350) nach Anspruch 1, **dadurch gekennzeichnet, dass** das axiale Spiel (58, 158, 358) zwischen den Hülsen (54, 56, 154, 156, 254, 256, 354, 356) so dimensioniert ist, dass die Hülsen (54, 56, 154, 156, 254, 256, 354, 356) axial voneinander entfernt bleiben, wenn der Mantel (52, 152, 252, 352) unter der Einwirkung der für den Kompressor (4) zulässigen maximalen thermomechanischen Bedingungen zusammengedrückt wird.

3. Schutzhülle (50, 150, 250, 350) nach einem der Ansprüche 1 oder 2, **dadurch gekennzeichnet, dass** der stromaufwärts gelegene Mantel (54, 154, 254, 354) und der Mantel (52, 152, 252, 352) jeweils radial stromaufwärts gelegene Flansche (52.3, 54.3, 152.3, 154.3, 252.3, 254.3, 352.3, 354. 3), wobei der stromaufwärtige Flansch (54, 154, 254, 354) an dem Mantel (52, 152, 252, 352) mittels Schraubverbindungen, vorzugsweise axial, befestigt ist, die den stromaufwärtigen radialen Flansch (54.3, 154.3, 254.3, 354.3) des stromaufwärtigen Gehäuses (54, 154, 254, 354) an dem stromaufwärtigen radialen Flansch (52.3, 152.3, 252.3, 352.3) des Mantels (52, 152, 252, 352) befestigen.

4. Schutzhülle (50, 150, 250, 350) nach einem der Ansprüche 1 bis 3, **dadurch gekennzeichnet, dass** der Mantel (52, 152, 252, 352) einen radial stromabwärts gelegenen Flansch (52.5, 152.5, 252.5, 352. 5) aufweist, der mit Befestigungslöchern versehen ist, und dass die stromabwärtige Hülse (56, 156, 256, 356) an dem Mantel (52, 152, 252, 352) mittels vorzugsweise radialer Befestigungselemente befestigt ist, die die Befestigungslöcher (52.4, 152.4, 252.4, 352.4) des stromabwärtigen radialen Flansches (52.5, 152.5, 252.5, 352.5) des Mantels (52, 152, 252, 352) durchdringen.

5. Schutzhülle (50, 150, 250, 350) nach einem der Ansprüche 1-4, **dadurch gekennzeichnet, dass** das axiale Spiel (58, 158, 358) zwischen den Hülsen (54, 56, 154, 156, 254, 256, 354, 356) durch eine Dichtung, insbesondere aus Silikon, ausgefüllt ist.

6. Schutzhülle (50, 150, 250, 350) nach einem der Ansprüche 1-5, **dadurch gekennzeichnet, dass** der Mantel (52, 152, 252, 352) jeder Hülse (54, 56, 154, 156, 254, 256, 354, 356) mit einer entsprechenden Überlappungslänge (L354, L₃₅₆) axial überlappt und die Außenfläche (54. 1, 56.1, 154.1, 156.1, 254.1, 256.1, 354.1, 356.1) der entsprechenden Hülse (54, 56, 154, 156, 254, 256, 354, 356) mit der Innenfläche (52.1, 152.1, 252.1, 352.1) des Mantels (52, 152, 252, 352) über höchstens 20% der entsprechenden Überlappungslänge (L₃₅₄, L₃₅₆) übereinstimmt.

7. Schutzhülle (250) nach einem der Ansprüche 1 bis 6, **dadurch gekennzeichnet, dass** das Gehäuse (250) eine zusätzliche Hülse (255) aufweist, die zwischen einer stromaufwärts und einer stromabwärts gelegenen Hülse (254, 256) angeordnet ist, und dass ein axiales Spiel (258.1, 258.2) die Hülsen (254, 255, 256) paarweise voneinander trennt.

8. Schutzhülle (50, 250, 350) nach einem der Ansprüche 1 bis 7, **dadurch gekennzeichnet, dass** jede Hülse (54, 56, 1254, 256, 354, 356) genau eine Reihe von Statorschaufeln (60, 62, 260, 261, 262) aufweist, die sich von der entsprechenden Hülse (54, 56, 254, 256, 354, 356) radial nach innen erstreckt.

9. Schutzhülle (50, 250, 350) nach Anspruch 8, **dadurch gekennzeichnet, dass** jede Hülse (54, 56, 254, 256, 354, 356) eine Schicht aus abrasivem Material (72, 74) aufweist, die stromaufwärts von einem oder jedem Statorschaufel (60, 62, 260, 261, 262) angeordnet ist und sich auf der Innenfläche der Hülse (54, 56, 254, 256, 354, 356) befindet.

10. Schutzhülle (50, 250, 350) nach einem der Ansprüche 8 oder 9, **dadurch gekennzeichnet, dass** der Mantel (52, 252, 352) eine Außenfläche (52.2) mit Verstärkungen (52.21, 52.22) in Form von Verdickungen aufweist, die eine zylindrische oder konische Oberfläche (52.21, 52.22) definieren.

11. Turbomaschine (2) mit einem Niederdruck-Axialverdichter (4), einem Hochdruckverdichter (6) und einer zwischen dem Niederdruckverdichter (4) und dem Hochdruckverdichter (6) angeordneten Zwischenschutzhülle (5), wobei die Turbomaschine den Niederdruck-Axialverdichter (4) mit einem Gehäuse (50, 150, 250, 350) nach einem der Ansprüche 1 bis 10 und eine stromaufwärts des Gehäuses (50, 150, 250, 350) angeordnete Leitschaufelstufe (76) mit variabler Steigung aufweist, wobei sich der Mantel (52, 152, 252, 352) des Gehäuses (50, 150, 250, 350) in axialer Richtung von der Leitschaufelstufe (76) mit variabler Steigung bis zur Zwischenschutzhülle (5) erstreckt.

12. Turbomaschine (2) nach Anspruch 11, mit einer Schutzhülle (50, 350) nach Anspruch 3, **dadurch gekennzeichnet, dass** die Leitschaufelstufe (76) einen Flansch (80.1) mit einem im Wesentlichen T-förmigen Querschnitt aufweist, der einen radialen Schenkel (80.2) und einen axialen Schenkel (80. 3) aufweist, wobei der radiale Zweig (80.2) den stromaufwärtigen radialen Flansch (54.3, 354.3) des stromaufwärtigen Mantels (54, 354) berührt und der axiale Zweig (80.3) den stromaufwärtigen radialen Flansch (54.3, 354.3) des stromaufwärtigen Mantels (54, 354) und den stromaufwärtigen radialen Flansch (52.3, 352.3) des Mantels (52, 352) axial überlappt.

13. Turbomaschine (2) nach Anspruch 12, **dadurch gekennzeichnet, dass** die variable Schaufelstufe (76) eine Zentrierfläche (80.5) des stromaufwärtigen Mantels (54, 354) umfasst; und/oder dass der axiale Abzweig (80.3) eine Zentrierfläche des stromaufwärts angeordneten radialen Flansches (52.3, 54.3, 352.3, 354.3) des stromaufwärtigen Mantels (54, 354) und/oder des Mantels (52, 352) umfasst.

14. Turbomaschine (2) nach einem der Ansprüche 12 oder 13, **dadurch gekennzeichnet, dass** der axiale Zweig (80.3) eine zylindrische Fläche (80.4) aufweist, die einen Antriebsmechanismus (86, 90, 92, 94) für die verstellbaren Schaufeln (76) trägt, wobei die zylindrische Fläche (80.4) den stromaufwärtigen radialen Flansch (54.3, 354.3) der stromaufwärtigen Hülse (54, 354) und den stromaufwärtigen radialen Flansch (52.3, 352.3) des Mantels (52, 352) axial übergreift.

## Claims

1. Compressor casing (50, 150, 250, 350) for a turbomachine (2) and in particular for an aircraft turbojet engine, the casing (50, 150, 250, 350) being **characterised in that** it comprises:
- a shell (52, 152, 252, 352) comprising a radially inner surface (52.1, 152.1, 252.1, 352.1);
- an upstream ferrule (54, 154, 254, 354); and
- a downstream ferrule (56, 156, 256, 356);
each ferrule (54, 56, 154, 156, 254, 256, 354, 356) supporting at least one row of stator blades (60, 62, 160, 162, 260, 261, 262) extending radially inwardly from the respective ferrule (54, 56, 154, 156, 254, 256, 354, 356);
each of the ferrules (54, 56, 154, 156, 254, 256, 354, 356) having a respective inner surface (54.5, 56.5, 154.5, 156.5, 254.5, 256.5, 354.5, 356.5) capable of delimiting an airflow (18), and each of the ferrules (54, 56, 154, 156, 254, 256, 354, 356) having a respective outer surface (54.1, 56.1, 255.1, 356.1) facing the inner surface (52.1, 352.1) of the shell (52, 152, 252, 352), the ferrules (54, 56, 154, 156, 254, 256, 354, 356) being fixed to the shell in a cantilevered manner and being arranged axially so as to have an axial clearance (58, 158, 258.1, 258.2, 358) between them, the casing being **characterized in that**
the ferrules (54, 56, 154, 156, 254, 256, 354, 356) each comprising a respective distal end (54.2, 56.2), these defining said axial clearance (58, 158, 258.1, 258. 2, 358), and **in that** the ferrules (54, 56, 154, 156, 254, 256, 354, 356) being attached to the shell (52, 152, 252, 352) only at their respective proximal ends (54.4, 56.4, 154.4, 156.4, 254.4, 256.4, 354.4, 356.4) axially opposite to their distal ends (54.2, 56.2).

2. Casing (50, 150, 250, 350) according to claim 1, **characterised in that** the axial clearance (58, 158, 358) between the ferrules (54, 56, 154, 156, 254, 256, 354, 356) is of such a size that when the shell (52, 152, 252, 352) is compressed under the action of maximum permissible thermomechanical conditions for the compressor (4), the ferrules (54, 56, 154, 156, 254, 256, 354, 356) remain axially spaced apart from each other.

3. Casing (50, 150, 250, 350) according to any of claims 1 or 2, **characterised in that** the upstream ferrule (54, 154, 254, 354) and the shell (52, 152, 252, 352) comprise respective upstream radial flanges (52.3, 54.3, 152.3, 154.3, 252.3, 254.3, 352.3, 354. 3), the upstream ferrule (54, 154, 254, 354) being attached to the shell (52, 152, 252, 352) by means of screw elements, preferably axial, connecting the upstream radial flange (54.3, 154.3, 254.3, 354.3) of the upstream ferrule (54, 154, 254, 354) to the upstream radial flange (52.3, 152.3, 252.3, 352.3) of the shell (52, 152, 252, 352).

4. Casing (50, 150, 250, 350) according to one of claims 1 to 3, **characterised in that** the shell (52, 152, 252, 352) comprises a downstream radial flange (52.5, 152.5, 252.5, 352. 5) provided with fastening holes, and **in that** the downstream ferrule (56, 156, 256, 356) is fastened to the shell (52, 152, 252, 352) by means of fastening elements, preferably radial fastening elements, which engage in the fastening holes (52.4, 152.4, 252.4, 352.4) in the downstream radial flange (52.5, 152.5, 252.5, 352.5) of the shell (52, 152, 252, 352).

5. Casing (50, 150, 250, 350) according to one of claims 1 to 4, **characterised in that** the axial clearance (58, 158, 358) between the ferrules (54, 56, 154, 156, 254, 256, 354, 356) is filled by a seal, in particular a seal made of silicone.

6. Casing (50, 150, 250, 350) according to one of claims 1 to 5, **characterised in that** the shell (52, 152, 252, 352) axially overlaps each ferrule (54, 56, 154, 156, 254, 256, 354, 356) by a respective overlap length (L₃₅₄, L₃₅₆) and the outer surface (54. 1, 56.1, 154.1, 156.1, 254.1, 256.1, 354.1, 356.1) of the respective ferrules (54, 56, 154, 156, 254, 256, 354, 356) coincides with the inner surface (52.1, 152.1, 252.1, 352.1) of the shell (52, 152, 252, 352) over no more than 20% of the respective overlap length (L₃₅₄, L₃₅₆).

7. Casing (250) according to any of claims 1 to 6, **characterised in that** the casing (250) comprises an additional ferrule (255) interposed between the upstream and downstream ferrules (254, 256), and **in that** an axial clearance (258.1, 258.2) separates the ferrules (254, 255, 256) in pairs.

8. Casing (50, 250, 350) according to any of claims 1 to 7, **characterised in that** each ferrule (54, 56, 254, 256, 354, 356) supports exactly one row of stator vanes (60, 62, w60, 261, 262) extending radially inwards from the respective ferrule (54, 56, 254, 256, 354, 356).

9. Casing (50, 250, 350) according to claim 8, **characterised in that** each ferrule (54, 56, 254, 256, 354, 356) receives a layer of abradable material (72, 74) disposed upstream of one or each row of stator vanes (60, 62, 260, 261, 262) and arranged on the inner surface of the ferrule (54, 56, 254, 256, 354, 356).

10. Casing (50, 250, 350) according to one of claims 8 or 9, **characterised in that** the shell (52, 252, 352) comprises an outer surface (52.2) having reinforcements (52.21, 52.22) in the form of thickenings defining a cylindrical or conical surface (52.21, 52.22).

11. A turbomachine (2) comprising a low-pressure compressor (4), a high-pressure compressor (6), and an intermediate casing (5) disposed between the low-pressure compressor (4) and the high-pressure compressor (6), the turbomachine comprising the low-pressure compressor (4) having a casing (50, 150, 250, 350) according to one of claims 1 to 10 and a row of variable stator vanes (76) upstream of the casing (50, 150, 250, 350), the shell (52, 152, 252, 352) of the casing (50, 150, 250, 350) extending axially from the row of variable stator vanes (76) to the intermediate casing (5).

12. Turbomachine (2) according to claim 11 comprising a casing (50, 350) according to claim 3, **characterised in that** the row of variable stator vanes (76) comprises a flange (80.1) of substantially T-shaped cross-section with a radial branch (80.2) and an axial branch (80. 3), the radial branch (80.2) contacting the upstream radial flange (54.3, 354.3) of the upstream ferrule (54, 354), and the axial branch (80.3) axially overlapping the upstream radial flange (54.3, 354.3) of the upstream ferrule (54, 354) and the upstream radial flange (52.3, 352.3) of the shell (52, 352).

13. Turbomachine (2) according to claim 12, **characterised in that** the row of variable stator vanes (76) comprises a centring surface (80.5) of the upstream ferrule (54, 354); and/or the axial branch (80.3) comprises a centring surface of the upstream radial flange (52.3, 54.3, 352.3, 354.3) of the upstream ferrule (54, 354) and/or of the shell (52, 352).

14. Turbomachine (2) according to any of claims 12 or 13, **characterised in that** the axial branch (80.3) comprises a cylindrical surface (80.4) which supports an actuating mechanism (86, 90, 92, 94) for the row of variable stator vanes (76), the cylindrical surface (80. 4) axially overlapping the upstream radial flange (54.3, 354.3) of the upstream ferrule (54, 354) and the upstream radial flange (52.3, 352.3) of the shell (52, 352).
